# EUROPEAN PATENT SPECIFICATION

(11) **EP 0 674 207 B1**
(45) Date of publication and mention of the grant of the patent: **28.11.2001**
(21) Application number: 94926385.9
(22) Date of filing: 09.09.1994
(51) Int. Cl.: G02F 1/133, G09G 3/00, G09G 3/36

(54) **DISPLAY DEVICE**
ANZEIGEVORRICHTUNG
DISPOSITIF D'AFFICHAGE

(30) Priority: 09.09.1993 JP 22431393; 14.09.1993 JP 22874793; 14.09.1993 JP 22875893; 14.02.1994 JP 1714194
(43) Date of publication of application: 27.09.1995
(73) Proprietor: KABUSHIKI KAISHA TOSHIBA, Kawasaki-shi, Kanagawa-ken 210-8572 (JP)
(72) Inventor: MASUDA, Youichi Mituzawa-High-Town, Yokohama-shi Kanagawa-ken 220 (JP); HARADA, Nozomu, Yokohama-shi Kanagawa-ken 226 (JP); NAKAMURA, Hiroki, Kanagawa-ken 253 (JP)
(74) Representative: Henkel, Feiler, Hänzel
(86) International application number: PCT/JP94/01502
(87) International publication number: WO 95/07493

(56) References cited:
- EP-A- 0 456 165
- JP-A- 4 165 329
- JP-A- 60 026 932
- JP-A- 62 271 569
- JP-A- 63 218 927
- US-A- 4 807 974
- DISPLAYS, vol. 14, no. 2, 1993, JORDAN HILL, OXFORD, GB, pages 104-114, XP000397433 C.REITA: "Integrated driver circuits for active matrix liquid crystal displays"
- IEEE INTERNATIONAL SOLID STATE CIRCUITS CONFERENCE, vol. 37, February 1994, NEW YORK US, page 154,155,328 XP000507097 H.NAKAMURA ET AL.: "3.3-inch, 1.9MPixel Integrated Driver Poly-Si TFT-LCD for HDTV Projector"

## Description

### Technical Field

The present invention relates to a display device such as a liquid crystal display device which includes a plurality of display pixels arranged in a matrix array, and its driving method.

### Background Art

A liquid crystal display device has been used in many fields, such as a television, computer display and electronic notebook, and particular attention has been paid to a liquid crystal display device in view of its light weight, its small thickness and its low power dissipation.

In a liquid crystal projector, for example, white color light from a light source is spectrally divided by a dichroic mirror, etc., into three primary colors, red, green and blue, these light color-components are incident on three independent liquid crystal devices to display a red, a green and a blue image, and these display images are again optically combined to project a resultant image on a transmission or a reflection screen for color display.

A liquid crystal display device for a liquid crystal projector has to meet the requirements that an incident optical system and projection optical system be made small without increasing their size. It is also required that, since the display image on the liquid crystal display device is projected in an enlarged form onto a screen, the display device be made compact and the display pixels be made at a fine pitch.

Attempts have been made, in such a liquid crystal display device, to form a display panel constructed of a plurality of display pixels, as well as a drive circuit section driving these display pixels, as one unit over a substrate so as to eliminate an operation of a cumbersome interconnection between the display panel and the drive circuit section.

The drive circuit section of the above-mentioned display device is comprised mainly of a shift register array where normally a plurality of shift registers are connected in one array. This is disclosed, for example, SID 93 DIGEST p383-p386 "A 1.9-in.1.5-MPixel Driver Fully-Integrated Poly-Si TFT-LCD for HDTV Projection".

However, since the shift register array is of such a type that a signal is transferred sequentially through these shift registers, if there are any defects, such as shorting, in part of the shift register array, then all the downstream shift registers fail.

In order to eliminate this drawback, for example, Jpn. Pat. Appln. KOKAI Publication No. 62-271569 discloses, in place of a driver circuit section composed mainly of shift registers, the idea of using, as a drive circuit section of the display device, a driver circuit comprised of one pair of decoders for outputting sequential pulses on the basis of a binary count value for counting a clock pulse and its inverted replica.

If the drive circuit section is comprised mainly of decoders, when there is any break or shorting in part of the interconnection, an output is not obtained at an area corresponding to any defect area, but it is possible to secure adequate reliability by, for example, providing one pair of decoders as a redundant unit in the drive circuit.

In the arrangement disclosed in Jpn. Pat. Appln. KOKAI Publication No. 62-271569, however, the decoder has a plurality of logic circuit sections each provided in a way corresponding to one scanning line or one signal line and, hence, not only the number of connection lines for transmitting numeral signals but also the number of logic circuit sections is increased with a recent trend toward a high definition of the display device and, conversely, this causes a fall in a manufacturing yield. Further, since the respective logic circuit sections are arranged in a way to correspond to one scanning line or one signal line each, no adequate measure can be taken against highspeed operation requirements resulting from the high definition of the display device.

A method is known by which, in the case where the number of effective scanning lines of a video signal, for example, is less than the number of horizontal pixel lines, the display panel's horizontal pixel lines remaining as ones not corresponding to the effective scanning lines of the video signal are scanned during a vertical blanking period, etc., to display a black blank. In the above-mentioned arrangement, it is difficult to scan all the remaining horizontal pixel lines for a very brief period of time. It is, therefore, not possible to expect any positive black display.

US-A-4,807,974 discloses a display device according to the characterizing part of claims 1 or 7. The display device dislosed in this document is a LCD comprising a decoder of thin film transistors which are formed along with display pixels in a substrate. The decoder of this dodument is used for reducing the number of input terminals of the LCD.

The object of the present invention is to provide a display device achieved in an attempt to solve the above-mentioned technical task, according to which it is possible to markedly reduce any operation error.

Another object of the present invention is to provide a display device and its drive method which can obtain a better display image even in the case where the number of horizontal pixel lines of the display panel and number of effective scanning lines, or the number of the display pixels in one horizontal pixel line and number of video data of the video signal, differ.

### Disclosure of Invention

The above objects are achieved by a display device according to claim 1 or claim 7. The dependent claims are related to further advantageous aspects of the present invention.

According to the display device of the present invention, since the scanning circuit section or video signal supplying circuit section includes the logic circuit sections less in number than the scanning lines or signal lines to be selected on the basis of an input numeral signal from the select control circuit, it is possible to, for the high definition of the display device, prevent an increase in the number of connection lines for transmitting the numeral signal and of the logic circuit sections and hence to manufacture a display device in a better yield. Further, a less number of logic circuit sections are used, it is also possible to suppress the operation frequency of the numeral signal to a low extent and to provide an allowance for element designing.

According to the method for driving the display device of the present invention, even if the number of the horizontal pixel lines of the display panel and effective scanning lines of the video signal, or the number of the display pixels in one horizontal pixel line and number of video data of the video signal, differ, for example, non-display data is displayed in a first period on at least one horizontal pixel line not corresponding to the effective scanning line of the video signal, in a second period different from the first period, on another horizontal pixel line not corresponding to the effective scanning line of the video signal, or non-display data is displayed, in a first period, on at least one display pixel not corresponding to the video data and in a second period different from the first period, on another display pixel not corresponding to the video data. By doing so, non-display data can be displayed on the non-display areas.

The scanning circuit section or video signal supply circuit section in the display device is comprised of logic circuit sections for selectively producing outputs on the basis of an input numeral signal from the select control circuit section. By doing so, the above-mentioned drive method can be readily realized in a simple arrangement.

### Brief Description of Drawings

FIG. 1 is a view schematically showing an arrangement of a liquid crystal projector according to one embodiment of the present invention;
FIG. 2 is a view schematically showing an arrangement of a liquid crystal device shown in FIG. 1;
FIG. 3 is a view schematically showing an arrangement of a scanning line drive circuit shown in FIG. 2;
FIG. 4 is a view schematically showing an arrangement of a video signal line drive circuit shown in FIG. 2;
FIG. 5 is a view showing one drive waveform diagram of the scanning line drive circuit shown in FIG. 2;
FIG. 6 is a view showing another drive waveform diagram of the scanning line drive circuit shown in FIG. 2;
FIG. 7 is a view showing another drive waveform of the scanning line drive circuit shown in FIG. 2;
FIG. 8 is a view showing one drive waveform diagram of a video signal line drive circuit shown in FIG. 2;
FIG. 9 is a view showing one form of an image displayed by the liquid crystal projector shown in FIG. 1; and
FIG. 10 shows a voltage-light transmittance characteristic illustrating a relation of the transmittance to a voltage between a pixel electrode and a common electrode of the liquid crystal device shown in FIG. 1.

### Best Mode of Carrying Out the Invention

A liquid-crystal projector according to one embodiment of the present invention will be explained below with reference to the accompanying drawings.

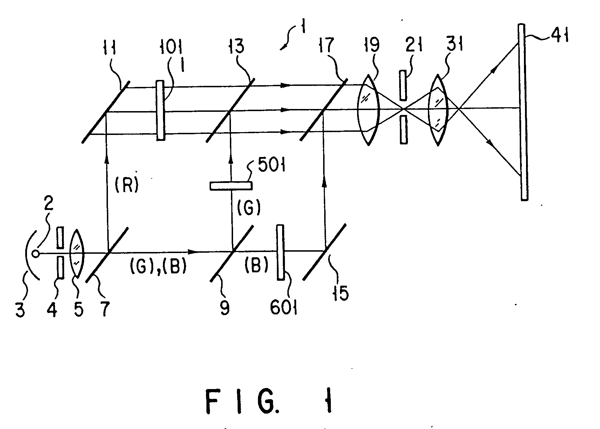

FIG. 1 is a view schematically showing an arrangement of the liquid crystal projector 1. The liquid crystal projector 1 comprises a light source 2, a reflection mirror 3 for reflecting a light source beam directed toward a back surface of the light source 2, a first aperture mask 4 for narrowing down the light beam coming from a light source 2, a light source optical lens 5 for allowing the light source beam which passes through the aperture mask 4 to appear as parallel beams, a first dichroic mirror 7 for allowing a red-color component R in the light beam which passes through the light source optical lens 5 to be reflected and green and blue color components G and B to be transmitted, a first reflection mirror 11 for allowing the red color component R which is reflected by the first dichroic mirror 7 to be guided to a liquid crystal display device 101 for red color display, a second dichroic mirror 9 for allowing only a green color component G in the transmitted beam which is transmitted through the first dichroic mirror 7 to be reflected and guiding it to a liquid crystal display device 501 for green color display and for allowing the blue color component B to be transmitted and guiding it to a liquid crystal display device 601, a third dichroic mirror 13 for allowing a video image which is transmitted through the liquid crystal display device 501 to be combined with a video image transmitted through the liquid display device 101, a second reflection mirror 15 for allowing a video image which is transmitted through the liquid crystal display 601 to be combined with a video image transmitted through the liquid crystal display device 101 and a fourth dichroic mirror 17. The video image thus combined is condensed by a condensing lens 19 and, after passing through an aperture in a second aperture mask 21, projected on a projection lens 31.

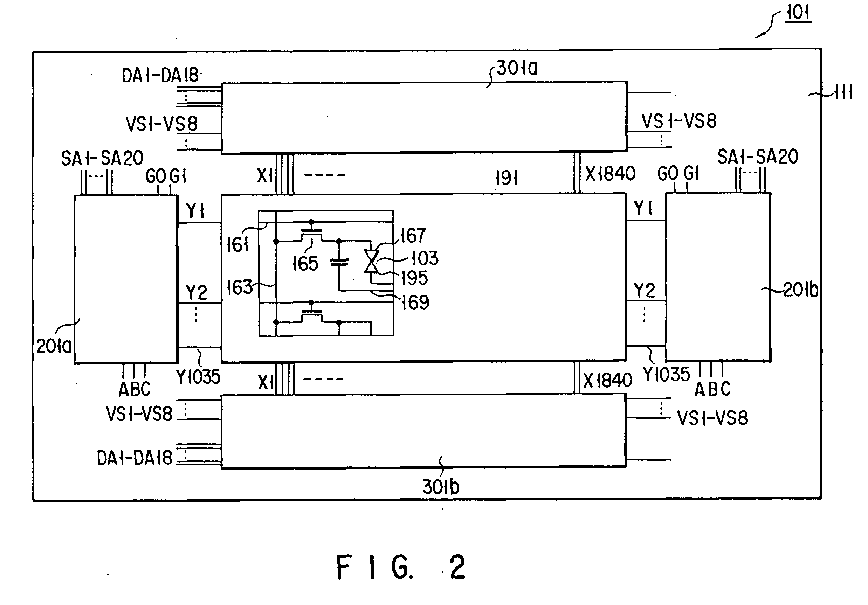

FIG. 2 is a view schematically showing an arrangement of the liquid crystal display device 101 in FIG. 1. The other liquid crystal display devices 501 and 601 are substantially the same as the liquid crystal display device 101 and any further explanation is, therefore, omitted.

The liquid crystal display device 101 has one pair of electrode substrates 111 and 191 and a high polymer molecule dispersed type nematic liquid crystal cell 103 held between these. The liquid crystal cell 103 comprises a high polymer molecular resin material and an anisotropic nematic liquid crystal of a positive permittivity dispersed in the high polymer molecular resin material.

One electrode 111 includes, over a quartz transparent insulating substrate, one set of scanning line drive circuits 201a and 201b arranged on the left and right sides of the liquid crystal cell 103 in a redundant way, one set of video signal line drive circuits 301a and 301b arranged on the upper and lower sides of the liquid crystal cell 103 in a redundant way, 1035 scanning lines 161 (Yj: j = 1, 2, ···, 1035) connected to the one set of scanning line drive circuits 201a and 201b, respectively, and 1840 video signal lines 163 (Xi: i = 1, 2, ···, 1840) connected to the one set of video signal line drive circuits 301a and 301b. Thin-film transistors (hereinafter referred to as TFTs) are electrically connected at their gates to the scanning lines 161 and at their drains to the video signal lines 163 and formed of polysilicon. Further, pixel electrodes 167 are electrically connected to the sources of the TFTs 165 and comprised of ITO (Indium-Tin-Oxide) and subsidiary capacitive lines 169 are integrally arranged substantially parallel to the scanning lines 161 so as to, each, form a subsidiary capacitance CS electrically connected in parallel to the pixel electrode 167.

The other electrode 191 are so arranged as to provide a common electrode 195 over the transparent insulating substrate, the common electrode being formed of ITO.

In the liquid crystal display devices 101, 501 and 601, 1840 display pixels are each comprised of a high polymer molecule dispersed type nematic liquid crystal cell 103 held between the pixel electrode 167 and the common electrode 195 and 1035 horizontal pixel lines are provided, the same thing can also be said of a display image which, being transmitted, is projected on the respective liquid crystal display devices 101, 501 and 601.

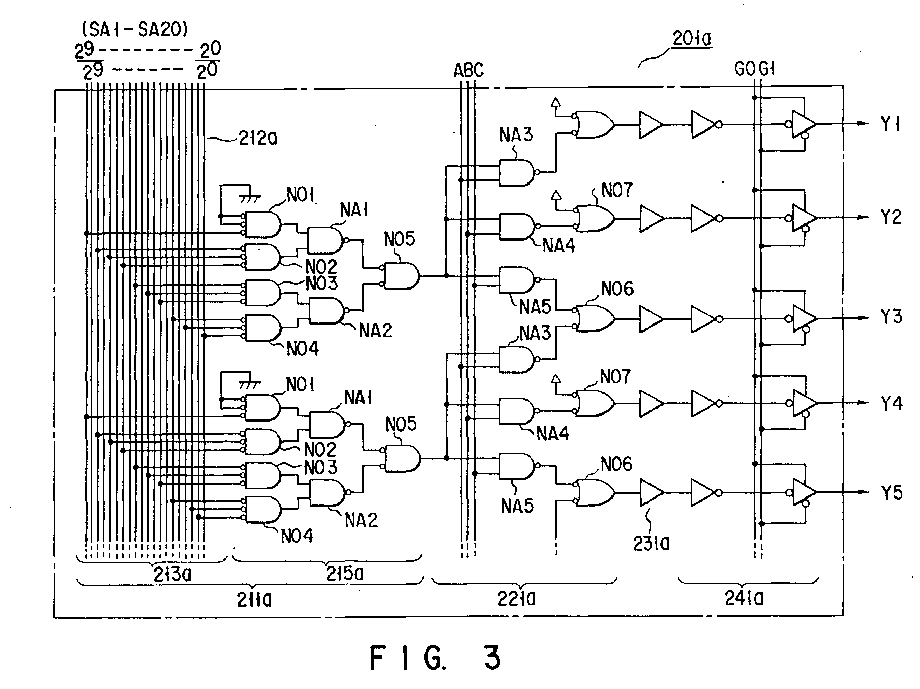

One scanning line drive circuit 201a will be explained below with reference to FIG. 3. In this embodiment, since the scanning line drive circuit 201a is substantially the same in structure as the other scanning line drive circuit 201b, any further explanation of the drive circuit 201b is omitted.

The scanning line drive circuit 201a comprises a numeral signal converting circuit section 211a, a scanning select circuit section 221a connected to the numeral signal converting circuit section 211a, buffer amplifiers 231a connected to the scanning select circuit section 221a, and an output control circuit section 241a connected to the buffer amplifiers 231a.

The numeral signal converting circuit section 211a comprises 20 numeral signal lines 212a having 10 non-inverted signal lines for supplying a 10-bit digital numeral signal SA1-SA10 and 10 inverted signal lines for supplying a digital numeral signal SA11-SA20 which is an inverted replica of the digital numeral signal SA1-SA10, stages of logic circuit sections 215a each including a set of three-input NOR gates NO1-NO4, and stages of matrix connection section 213a each connecting those selected from the non-inverted and inverted signal lines in each common bit to the three-input NOR gates NO1 to NO4 in the logic circuit section 215a of a corresponding stage.

The 10-bit non-inverted and inverted signal lines are selected as a different combination for each matrix connection section 213a. In a first stage matrix connection section 213a for example, selection is made of a 10th-bit (2⁹) non-inverted signal line, a 9th-bit (2⁸) non-inverted signal line, a 8th-bit (2⁷) non-inverted signal line, a 7th-bit (2⁶) non-inverted signal line, a 6th-bit (2⁵) non-inverted signal line, a 5th-bit (2⁴) non-inverted signal line, a 4th-bit (2³) non-inverted signal line, a 3rd-bit (2²) non-inverted signal line, a 2nd-bit (2¹) non-inverted signal line and a 1st-bit (2⁰) inverted signal line. In the second stage matrix connection section 213a, selection is made of a 10th-bit (2⁹) non-inverted signal line, a 9th-bit (2⁸) non-inverted signal line, a 8th-bit (2⁷) non-inverted signal line, a 7th-bit (2⁶) non-inverted signal line, a 6th-bit (2⁵) non-inverted signal line, a 5th-bit (2⁴) non-inverted signal line, a 4th-bit (2³) non-inverted signal line, a 3rd-bit (2²) non-inverted signal line, a 2nd-bit (2¹) inverted signal line and a 1st-bit (2⁰) non-inverted signal line.

The logic circuit sections 215a are, for example, of 518 stages, the number of which is smaller than that of 1035 scanning lines 161 (Yj: j = 1, 2, ···, 1035). The logic circuit section of each stage includes four 3-input NOR gates NO1 to NO4, two 2-input NAND gates NA1 and NA2 and one 2-input NOR gates NO5. The outputs of the NOR gates NO1 and NO2 are connected to first and second input terminals of NAND gates NA1. The outputs of the NOR gates NO3 and NO4 are connected to first and second input terminals of NAND gates NA2. The output terminals of the NAND gates NA1 and NA2 are connected to first and second input terminals of the NOR gate NO5.

The output signal of the NOR gate NO5 of each logic circuit section 215a is supplied to the scanning select circuit 221a. In the scanning select circuit section 221a, the output signal of the NOR gate NO5 of each logic circuit sections 215a is divided into three parts and supplied to first input terminals of the first, second and third 2-input NAND gates NA3 to NA5. Second input terminals of these NAND gates NA3 to NA5 are connected to three scanning lines A, B and C. The output terminal of the first NAND gate NA3 is connected to a second input terminal of a 2-input NOR gate NO6 which is also provided for a NAND gate NA5 of the preceding stage logic circuit section 215a. The output terminal of the second NAND gate NA4 is connected to a first input terminal of a 2-input NOR gate NO7. A second input terminal of the NOR gate 7 is connected to a power supply terminal set at an ON level. The output terminal of the third NAND gate NA5 is connected to a first input terminal of another 2-input NOR gate NO6 which is provided also for a NAND gate NA3 of the subsequent stage logic circuit section 215a.

The output signals of NOR gates NO6 and NO7 are fed through the buffer amplifiers 231a to the output control circuit section 241a. The output control circuit section 241a is controlled by output control signals VG0 and VG1 fed respectively through output control lines G0 and G1. The output control signal VG1 is an inverted replica of the output control signal VG0, and the output control circuit section 241a determines on the basis of the output signals VG0 and VG1 whether or not the buffer amplifier 231a is to be connected to a corresponding scanning line 161.

In a case where a defective operation occurs, for example, in the one-side scanning line drive circuit 201a, the scanning line drive circuit 201a is electrically disconnected from the scanning line 161, so that the other-side scanning line drive circuit 201b can operate without being adversely affected by the one-side scanning line drive circuit 201a.

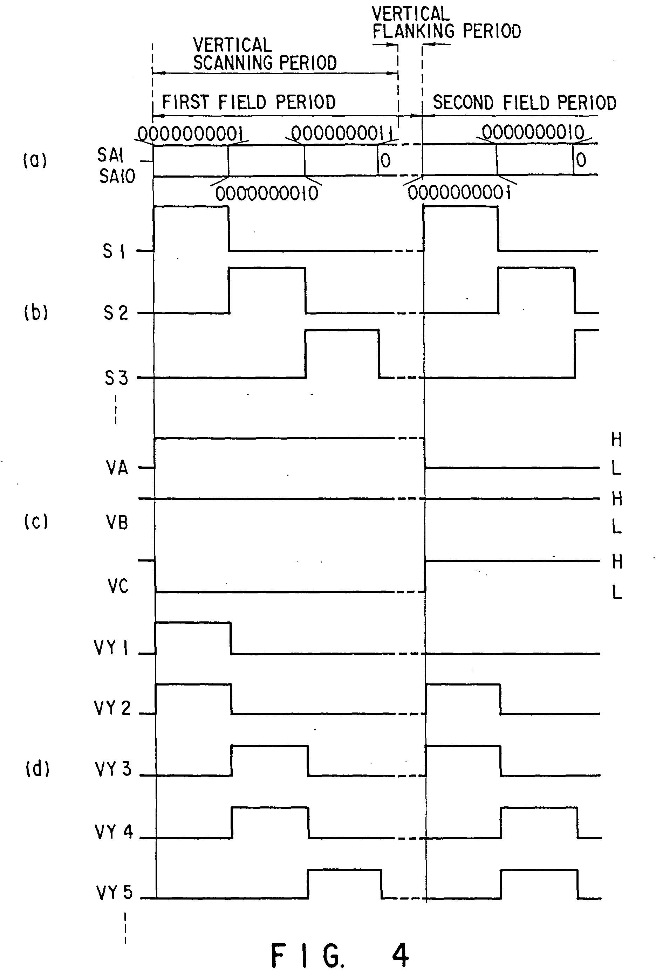

With reference to FIG. 4, explanation will be given below about the case where the scanning line driving circuit 201a is used for a two-line-at-a-time drive operation of selecting the scanning lines two by two to appropriately display the video signal VS on TV broadcasting, etc., and simultaneously driving the two scanning lines of each selection, wherein the selection is made such that the combination of two scanning lines to be different between an odd-number field period and even-number field period.

The numeral signal lines 212a receives a 10-bit digital numeral signal SA1-SA10 from a count circuit or the like and a 10-bit digital numeral signal SA10-SA20 from the count circuit or the like via an inverting output circuit. The digital numeral signal SA1-SA10 is sequentially added as {0000000001}, {0000000010} {0000000011}, ··· for every two horizontal scanning period as shown in FIG. 4(a), and the respective bits thereof are supplied to a 2⁹ signal line, 2⁸ signal line, 2⁷ signal line, 2⁶ signal line, 2⁵ signal line, 2⁴ signal line, 2³ signal line, 2² signal line, 2¹ signal line and 2⁰ signal line of the numeral signal lines 212a. The inverted digital numeral signal SA11-SA20 is sequentially subtracted as {1111111110}, {1111111101}, {1111111100} ··· (not shown), and the respective bits thereof are supplied to a 2⁹ inverted signal line, 2⁸ inverted signal line, 2⁷ inverted signal line, 2⁶ inverted signal line, 2⁵ inverted signal line, 2⁴ inverted signal line, 2³ inverted signal line, 2² inverted signal line, 2¹ inverted signal line and 2⁰ inverted signal line of the numeral signal lines 212a. For example, when the digital numeral signal SA1-SA10 from the count circuit emerge as a {0000000001} shown in FIG. 4(a), a {0} is supplied to the 2⁹ signal line, 2⁸ signal line, 2⁷ signal line, 2⁶ signal line, 2⁵ signal line, 2⁴ signal line, 2³ signal line, 2² signal line, 2¹ signal line and 2⁰ inverted signal line, and a {1} is supplied to the 2⁹ inverted signal line, 2⁸ inverted signal line, 2⁷ inverted signal line, 2⁶ inverted signal line, 2⁵ inverted signal line, 2⁴ inverted signal line, 2³ inverted signal line, 2² inverted signal line, 2¹ inverted signal line and 2⁰ signal line.

When a {0000000001} is input as the digital numeral signal SA1-SA10, only an output S1 is obtained from the first stage of the numeral signal converting circuit section 211a as shown in FIG. 4(b). Similarly, when the digital numeral signal SA1-SA10 is output as a {0000000010} from the count circuit, then a {0} is supplied to the 2⁹ signal line, 2⁸ signal line, 2⁷ signal line, 2⁶ signal line, 2⁵ signal line, 2⁴ signal line, 2³ signal line, 2² signal line, 2⁰ signal line and 2¹ inverted signal line of the numeral signal line 212a and a {1} is supplied to the 2⁹ inverted signal line, 2⁸ inverted signal line, 2⁷ inverted signal line, 2⁶ inverted signal line, 2⁵ inverted signal line, 2⁴ inverted signal line, 2³ inverted signal line, 2² inverted signal line, 2⁰ inverted signal line and 2¹ signal line. In consequence, only an output S2 is obtained from the second stage of the numeral signal converting circuit section 211a upon the inputting of the digital numeral signal {0000000010}.

As shown in FIG. 4(c), a select signal VA is applied to the first scanning select line A, noting that it is placed in an ON level during the first field period and in an OFF level during the second field period; a select signal VB which is placed at a given ON level is applied to the second scanning select line B; and an inverted replica VC of the select signal VA is applied to the third scanning select line C.

By the output S of the numeral signal converting circuit section and respective select signals VA, VB and VC of the respective scanning select lines A, B and C, a scanning signal VYj is output to two adjacent scanning lines 161 for each horizontal scanning period as shown in FIG. 4(d). The combination of two scanning lines 161 selected at a time is made different between the first and second field periods.

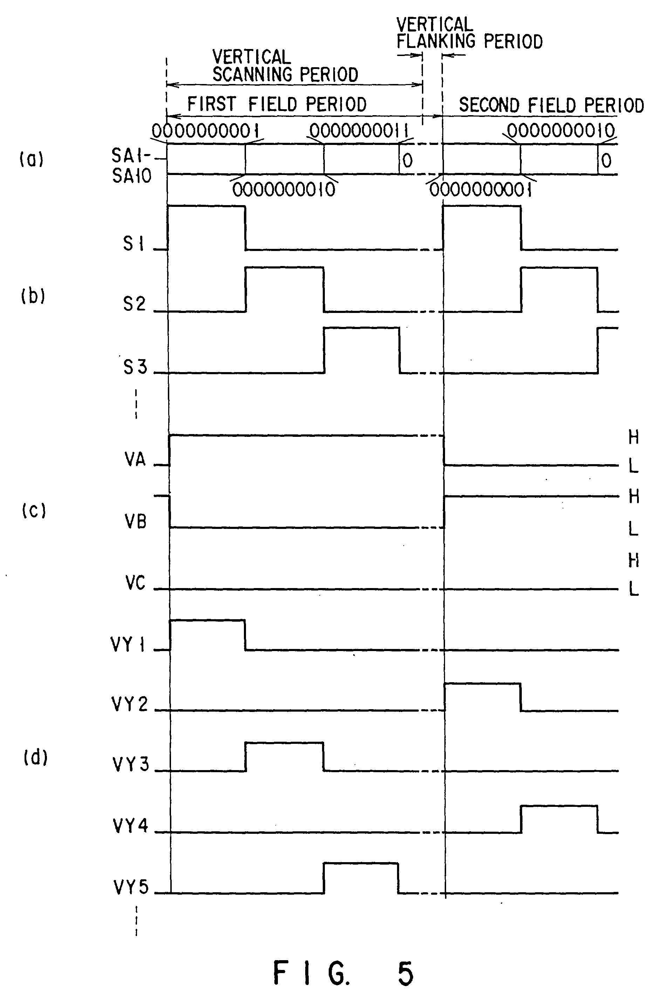

With reference to FIG. 5, explanation will be given below about the case where the scanning drive circuit 201a is used for an interlace drive operation of selectively scanning the odd-number scanning lines during the odd-number field period and the even-number scanning lines during the even-number field period in an alternate way so as to appropriately display the video signal VS on television broadcast, etc.

When the 10-bit digital numeral signal SA1-SA10 and 10-bit inverted digital numeral signal SA11-SA20 are input to the numeral signal lines 212a as in the same way as set out above, outputs S as shown in FIG. 5(b) is obtained from the respective stages of the numeral signal converting circuit section 211a.

As shown in FIG. 5(c), a select signal VA which is placed in the ON level during the first field period and in the OFF level during the second field period is supplied to the first scanning select line A, an inverted replica VB of the select signal VA is supplied to the second scanning select line B and a select signal VC of a given OFF level is supplied to the third scanning select line C.

Scanning signals VYj are output from the scanning lines 161, on every other line basis for each horizontal scanning period according to the output of the numeral signal converting circuit section 211a and select signals VA, VB and VC on the scanning select lines A, B and C as shown in FIG. 5(d). A different select scanning 161 is made on the first field period and on the second field period.

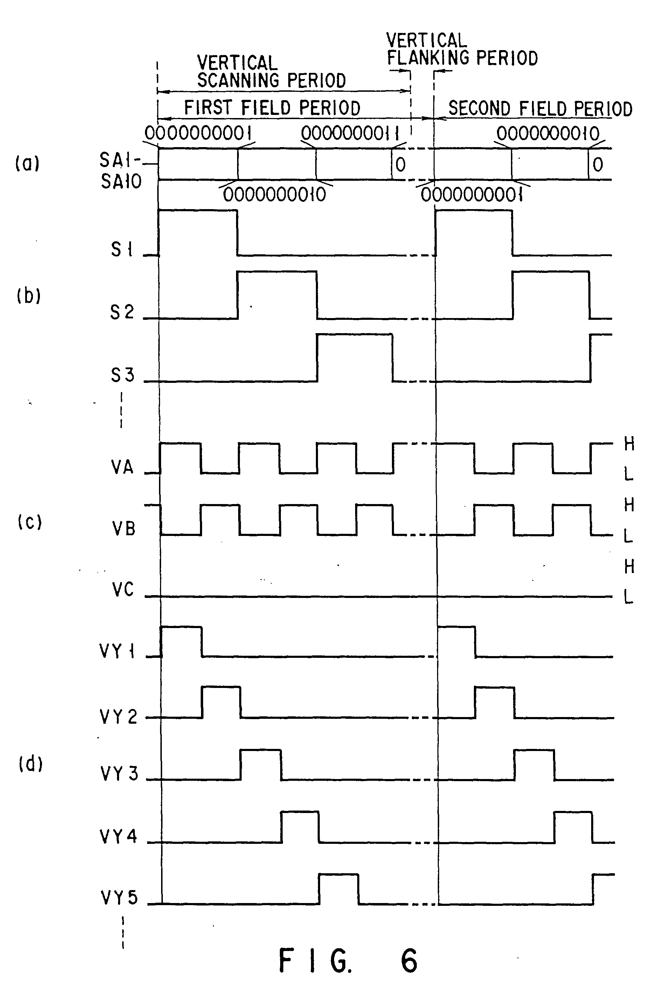

With reference to FIG. 6, explanation will be given below about the case where the scanning line drive circuit 211a is used for a sequential drive operation of selecting all the scanning lines during each vertical scanning period so as to appropriately display the video signal VS such as a computer signal.

When, as in the same way as set out above, 10-bit digital numeral signal SA1-SA10 and 10-bit inverted digital numeral signal SA11-SA20 are input to the numeral signal lines 212a as shown in FIG. 6(a), outputs S shown in FIG. 6(b) are obtained from the respective stages of the numeral signal converting circuit 211a as shown in FIG. 6(b).

As shown in FIG. 6(c), a select signal VA for varying one period to one-half horizontal scanning period is applied to the first scanning select line A, an inverted replica VB of the select signal VA is supplied to the second scanning select line B and a select signal VC for taking a given OFF level is applied to the third scanning line C.

Scanning signals VYj for sequentially selectively scanning two scanning lines during one horizontal scanning period are output from the scanning lines 161 according to the output of the numeral signal converting circuit section 211a and select signals VA, VB and VC on the scanning select lines A, B and C as shown in FIG. 6(d).

A two-lines-at-a-time drive, interlace drive and sequential scanning drive operations can be selected in accordance with the input digital numeral signal SA1-SA10 and scanning select signals VA, VB and VC on the scanning select lines A, B and C in the way as set out above.

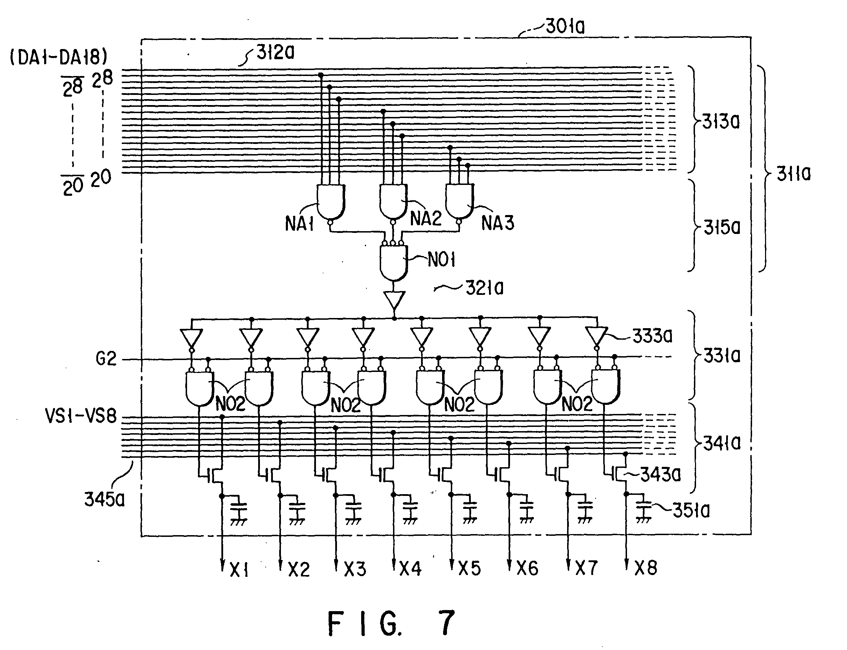

With reference to FIG. 7, the video signal line drive circuit 301a of the liquid crystal display device 101 will be explained below In this embodiment, since the video signal line drive circuit 301a is substantially the same in arrangement as the other video signal line drive circuit 301b, any further explanation of the drive circuit 301b is omitted.

The video signal line drive circuit 301a comprises a numeral signal converting circuit section 311a having both a matrix connection section 313a and logic circuit sections 315a, buffer amplifiers 321a connected to the numeral signal converting circuit 311a, an output control circuit section 331a connected to the buffer amplifiers 321a, a video signal select circuit 341a connected to the output control circuit section 331a, and a storage capacitance section 351a.

The numeral signal conversion circuit section 311a comprises 18 numeral signal lines 312a constituted by nine non-inverted signal lines for supplying a 9-bit digital numeral signal DA1-DA9 and nine inverted signal lines for supplying an inverted replica DA10-DA18 of the digital numeral signal DA1-DA9, stages of logic circuit sections 315a each including a set of 3-input NAND gates NA1-NA3, and stages of matrix connection sections 313a connecting each one selected from the non-inverted and inverted signal lines in the respective common bits to the 3-input NAND gates NA1-NA3 of a corresponding stage.

The 9-bit non-inverted and inverted signal lines are selected in a different combination for each matrix connection section 313a. In the first stage matrix connection section, for example, a 9th-bit (2⁸) inverted signal line, 8th-bit (2⁷) inverted signal line, 7th-bit (2⁶) inverted signal line, 6th-bit (2⁵) inverted signal line, 5th-bit (2⁴) inverted signal line, 4th-bit (2³) inverted signal line, 3rd-bit (2²) inverted signal line, 2nd-bit (2¹) inverted signal line and 1st-bit (2⁰) non-inverted signal line are selected. In the second stage matrix connection section 313a, though being not shown, a 9th-bit (2⁸) non-inverted signal line, 8th-bit (2⁷) non-inverted signal line, 7th-bit (2⁶) non-inverted signal line, 6th-bit (2⁵) non-inverted signal line, 5th-bit (2⁴) non-inverted signal line, 4th-bit (2³) non-inverted signal line, 3rd-bit (2²) non-inverted signal line, 2nd-bit (2¹) inverted signal line, and 1st-bit (2⁰) non-inverted signal line are selected.

Each logic circuit section 315a comprises three 3-input NAND gates NA1-NA3 and one 3-input NOR gate NO1. The output terminals of the NAND gates NA1-NA3 are connected to first, second and third input terminals of the 3-input NOR gate NO1. The output signal of the NOR gate NO1 is fed through the buffer amplifier 321a to the output control circuit section 331a. In the output control circuit section 331a, the output signal of the NOR gate NO1 of each logic circuit section 315a is divided into eight ones which are supplied via corresponding buffer amplifiers 333a to first input terminals of eight 2-input NOR gates NO2. An output control line G2 is connected to second input terminals of the NOR gates NO2.

The output signals of the NOR gate NO2 are supplied as output signals of the output control circuit section 331a to the video signal select circuit section 341a where they are input to the gates of eight analog switches 343a provided for video data selection. The drains of these analog switches 343a are connected to eight video signal input lines 345a and, when the respective outputs S of the output control circuit section 331a are placed in an ON period, video signals VS1, ···, VS8 are sample-output from the sources of the analog switches 343a. Each video data VD sampled by the video signal select circuit section 341a is supplied to the corresponding video signal line 163 via the storage capacitance section 351a for storing the data.

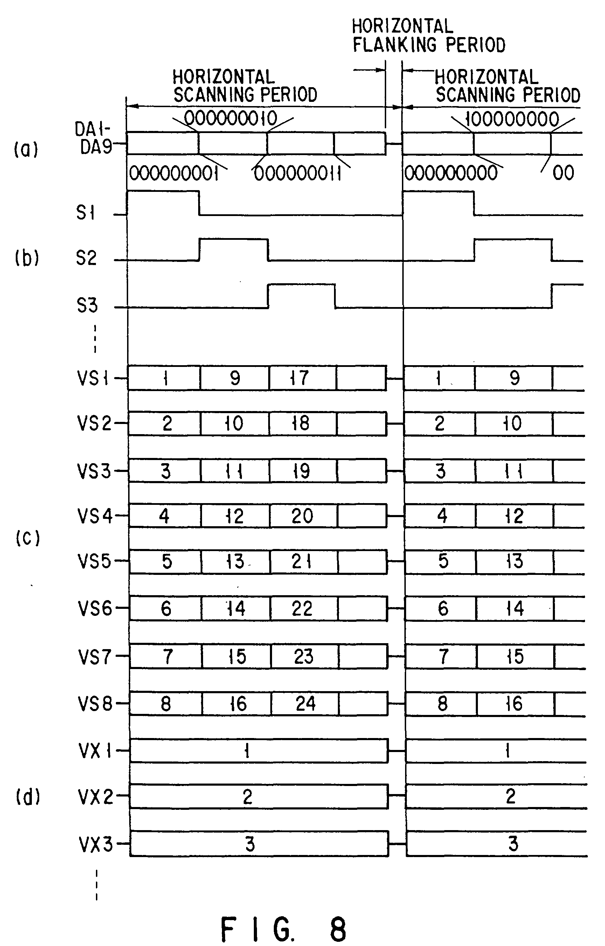

The operation of the video signal line drive circuit 301a will be explained below with reference to FIG. 8.

As shown in FIG. 8(a), the 9-bit digital numeral signal DA1-DA9 is sequentially added by the count circuit or the like (not shown) in such a timing as to selectively output video data VD to the video signal line 163. In each timing, when the digital numeral signal DA1-DA9 is output by the counter (not shown) to the 2⁸ signal line, 2⁷ signal line, 2⁶ signal line, 2⁵ signal line, 2⁴ signal line, 2³ signal line, 2² signal line, 2¹ signal line and 2⁰ signal line of the numeral signal lines 312a, then the inverted replica DA10-DA18 of the digital numeral signals DA1-DA9 is output from an inverting output circuit (not shown) to the 2⁹ inverted signal line, 2⁸ inverted signal line, 2⁷ inverted signal line, 2⁶ inverted signal line, 2⁵ inverted signal line, 2⁴ inverted signal line, 2³ inverted signal line, 2² inverted signal line, 2¹ inverted signal line and 2⁰ inverted signal line.

For example, when the digital numeral signal DA1-DA9 from the counter circuit emerge as {0000000001}, then a {0} is supplied to the 2⁸ signal line, 2⁷ signal line, 2⁶ signal line, 2⁵ signal line, 2⁴ signal line, 2³ signal line, 2² signal line, 2¹ signal line and 2⁰ inverted signal line. Further, a {1} is supplied to the 2⁹ inverted signal line, 2⁸ inverted signal line, 2⁷ inverted signal line, 2⁶ inverted signal line, 2⁵ inverted signal line, 2⁴ inverted signal line, 2³ inverted signal line, 2² inverted signal line, 2¹ inverted signal line and 2⁰ signal line. In consequence, when the input digital numeral signal DA1-DA9 is {0000000001}, an output S1 is obtained from the first stage of the output control circuit section 331a as shown in FIG. 8(b).

Further, video signals VS1, ···, VS8 are input to the eight video data lines 345a as shown in FIG. 8(c).

When the output S from the first stage of the output control circuit section 331a is placed in an ON period, the first to eighth video data select analog switches 343a are selected at a time and the respective video data VD1, ···, VD8 are output to the first to eighth video signal lines 163.

Further, when an output S2 from the second stage of the output control circuit section 331a is placed during an ON period, the corresponding video data select analog switches 343a are selected at a time and the respective video data VD9, ···, VD16 are output to the ninth to sixteenth video signal lines 163.

Thus, the video data VD1, ···, VD1840 are output to the 1840 video signal lines 163 for each horizontal scanning period.

The video data VD delivered to the video signal line 163 is written into the pixel electrode 167 via TFT 165 during the period in which the scanning line 161 is selected, and a potential difference between the pixel electrode 167 and the common electrode 195 is held to display it during the period before the scanning line 161 is selected again.

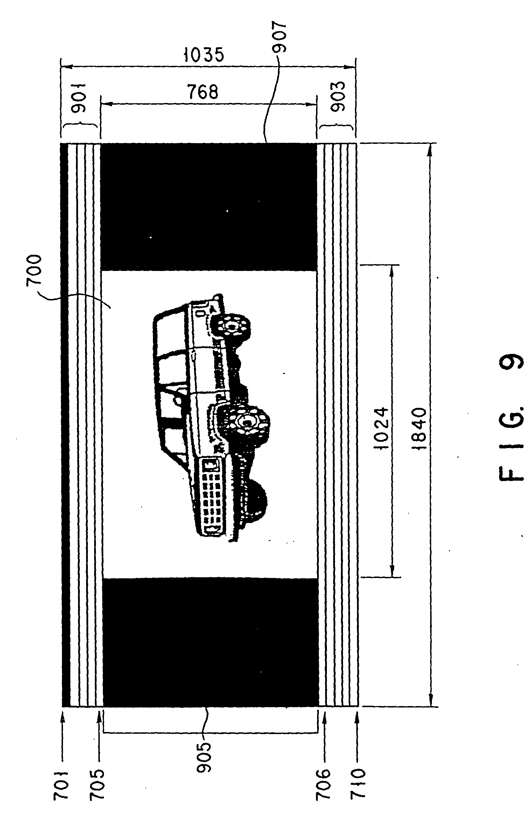

The number of effective scanning lines and that of video data of the video signal VS can be smaller than the number of the horizontal pixel lines of the liquid crystal display device 101 and that of display pixels contained in the horizontal pixel line, respectively. Explanation will be given about effecting a display with the number of effective video data VD of the video signal VS being 1024 per effective scanning line and the number of effective scanning lines being 768 as shown in FIG. 9.

Here, explanation will be given below about effecting a display on a display area 700 by a sequential drive shown in FIG. 6 with non-display areas 901 and 903 comprised of 140 and 127 lines, respectively, at the top and bottom portions of the display area and with non-display areas 905 and 907 comprised of 408 display pixels, respectively, at the left and right sides of the display area as shown, for example, in FIG. 9.

In one vertical scanning period of a first field period, the scanning line drive circuit 201a shown in FIG. 2 selects the 141st to 908th horizontal pixel lines based on the 10-bit digital numeral signal SA1-SA10 which is sequentially increased from {0001000111} to {0111000110} by a ROM. In a first vertical blanking period of the first field period, the 1st to 28th horizontal pixel lines are sequentially scanned, as a first block 701, based on the 10-bit digital numeral signal SA1-SA10 which is sequentially increased from {0000000001} to {0000001110} by the ROM. In a fifth vertical blanking period of the subsequent fifth field period, the 113rd to 140th horizontal pixel lines are sequentially scanned, as a fifth block 705, based on the 10-bit digital numeral signal SA1-SA10 which is sequentially increased from {0000111001} to {0001000110} by the ROM. In a sixth vertical blanking period of the sixth field period, the 909th to 936th horizontal pixel lines are sequentially scanned, as a sixth block 706, based on the 10-bit digital numeral signal SA1-SA10 which is sequentially increased from {0111000111} to {0111010100} by the ROM. In a 10-th vertical blanking period of the subsequent 10-th field period, the 1021st to 1035th horizontal pixel lines are sequentially scanned, as a 10-th block 710, based on the 10-bit digital numeral signal SA1-SA10 which is sequentially increased from {0111111111} to {1000000110} by the ROM.

To the video input lines 345a of the video signal line drive circuit 301a, 1024 video data VD corresponding to the 409th to 1432th display pixels during one horizontal scanning period and a video signal containing non-display data VB corresponding to the 1st to 408th non-display pixels and non-display data VB corresponding to the 1433rd to 1840th non-display pixels during its horizontal blanking period are input.

During the vertical blanking period of each field period, non-display data VB corresponding to the 1840 display pixels are input to the video input lines 345a.

By doing so, the 136th to 903th horizontal pixel lines are sequentially selected during one vertical scanning period and the non-display data VB are displayed, as a first block 701, on the 1st to 28th horizontal pixel lines during its vertical blanking period. This being sequentially repeated, the non-display data VB are displayed on all the non-display areas 901 and 903 divided in 10 blocks.

It is sometimes difficult to transfer the non-display data VB corresponding to the 1st to 408th non-display pixels and non-display data VB corresponding to the 1433th to 1840th non-display pixels within the horizontal blanking period. In such a case, all the non-display data VB corresponding to the 1st to 408th non-display pixels and non-display data VB corresponding to the 1433rd to 1840th non-display pixels are not displayed during the same one horizontal scanning period but may be displayed in a way divided in a plurality of blocks.

The non-display areas 901 to 904 may be obtained by transferring to display the non-display data VB corresponding to the 1st to 80th non-display pixels for each horizontal blanking period during one vertical scanning period of the first field period, the non-display data VB corresponding to the 81st to 160th non-display pixels for each horizontal blanking period during one vertical scanning period of the second field period, and the non-display data VB corresponding to the 1752nd to 1840th non-display pixels for each horizontal blanking period during one vertical scanning period of the subsequent eleventh field period, for example.

Further, for each field period, the non-display pixels corresponding to the non-display data need not be made equal in respective horizontal pixel lines, and may be respectively made different. Therefore, it is possible to divide the non-display area into a plurality of blocks and display the non-display data on different non-display pixels for each horizontal pixel line. For example, during the first field period, the non-display data VB are displayed on the 1st to 80th non-display pixels with respect to the 141st to 142rd horizontal pixel lines, on the 81th to 146th non-display pixels with respect to the 143th and 144th horizontal pixel lines, and on the 161st to 240th non-display pixels with respect to the 145th to 142nd horizontal pixel lines. As for the 143th to 144th horizontal pixel lines, since the non-display data VB corresponding to the 1st to 80th non-display pixels are held in the horizontal capacitance sections 351a at the time of displaying the 141th and 142th horizontal pixel lines and remain there, the non-display data VB corresponding to the 1st to 80th non-display pixels need not be transferred. Accordingly, while the non-display data VB are displayed on the 1st to 80th non-display pixels, the non-display data VB are displayed on the 81th to 160th non-display pixels.

With the liquid crystal display device 101 arranged as described above, the display area 700 can readily be provided at substantially the central area of the display screen by controlling the digital numeral signal input to the scanning line drive circuits 201a and 201b and video signal drive circuits 301a and 301b.

Regarding the video signal drive circuits 301a and 301b, it effectively utilizes the memory function of the storage capacitance section 351a, so that the non-display area can be obtained without using any specific frame memory or the like, even if a lot of non-display pixels are set in each horizontal pixel line.

The digital numeral signal SA1 to SA20 may be determined so as to select the 136th to 903th horizontal pixel lines during one vertical scanning period, and to sequentially select the 1st, list, 21st, ··· horizontal pixel lines as a first block during a first vertical blanking period, the 2nd, 12nd, 22nd, ··· horizontal pixel lines as a second block during the second vertical blanking line period, the 3rd, 13rd, 23rd, ··· horizontal pixel lines as a third block during the third vertical blanking period, and the 10th, 20th, 30th, ··· horizontal pixel lines as a 10th block during ··· 10th vertical blanking period.

Since the non-display areas 901 and 903 are dividedly driven, the horizontal pixel lines constructing the non-display areas 901 and 903 selected during one vertical blanking period are uniformly dispersed in a display screen as compared with the above-mentioned procedure. Therefore, even if the number of blocks dividing the non-display areas 901 and 903 is increased, it is possible to attain a better display image without involving a flicker, etc.

Although, in this embodiment, the non-display areas 901 and 903 are divided into 10 blocks in the vertical scanning direction and the non-display data (VB) are written onto every horizontal pixel line of. the non-display areas 901 and 903 during the 10-times vertical blanking period, needless to say, all the horizontal pixel lines constituting the non-display areas 901 and 903 are selected at a time.

The same thing can also be said about the case where the non-display data (VB) is written in one horizontal pixel line.

In the case where, as set out above, the number of effective scanning lines for the video signals VS and that of the video data VD are smaller than the number of the horizontal pixel lines of the liquid crystal device 101 or the number of display pixels constituting one horizontal pixel line, it follows that, according to the liquid crystal projector 1 shown in FIG. 1, the display area 700 and non-display areas 901, 903, 905 and 907 are displayed on the screen 41 as shown, for example, in FIG. 9.

In such a case, the liquid crystal projector 1 may be arranged such that a decrease in the number of effective scanning lines of the video signal VS or the number of effective video data VD is detected, and the magnification of the projecting lens 31 thereof is increased based on the result of detection. Thus, even when the number of effective scanning lines of the video signal VS or the number of effective video data VD varies, it is possible to obtain a display area 700 of a substantially constant size on the screen 41 at all times.

As described above, according to the liquid crystal device 101 of the present invention, the respective scanning lines 161 and analog switches 343a for respective video data selection are selected responsive to the input digital numeral signals SA1-SA20 and DA1-DA18. Thus, according to the liquid crystal display device 101 of this embodiment, the scanning lines 161 and video data select analog switches 343a are sequentially selected as set out above and, in addition, it is also possible to select any scanning lines 161 and video data select analog switches 343a by the digital numeral signals SA1-SA20 and DA1-DA18 applied to the numeral signal lines 212a and 312a.

According to the liquid crystal projector 1 of this embodiment, even if the number of horizontal pixel lines differs from that of the effective scanning lines of the video signal VS or even if the number of the display pixels constituting one horizontal pixel line differs from that of the video data VD constituting one effective scanning line, it is possible to obtain a display area and non-display areas at any place in the display screen.

According to the liquid crystal projector 1 of this invention, even if the number of horizontal pixel lines greatly differs from that of effective scanning lines of the video signal VS or even if the number of display images constituting one horizontal pixel line greatly differs from that of video data VD constituting one effective scanning lines, it is possible to obtain a display area and non-display areas in any place in the display screen by dividedly scanning the horizontal pixel lines of the non-display area during plural vertical blanking periods or dividedly applying the non-display data VB to the display pixels of the non-display area during plural horizontal blanking periods of the vertical scanning period.

Although, in this embodiment, the display area is located at substantially the central area of the display screen as set out above, the present invention is not restricted thereto. The display area can be located in any position by controlling the digital numeral signals SA1-SA10 and DA1-DA9. It is also possible to prepare for a multi-image screen.

Further, the respective scanning lines 161 and video data select analog switches 343a can be selected in any sequence by controlling the increment and decrement of the digital numeral signals SA1-SA10 and DA1-DA9. As already set out, the liquid crystal projector 1 of this embodiment is comprised of, for example, three substantially similar liquid crystal display devices 101, 501 and 601. As evident from FIG. 1, however, the number of inversions of an image transmitted through the liquid crystal display device 501 only becomes odd-numbered and it is necessary that different handling be effected in that device in view of the select sequence of the video data select analog switches 343a or the select sequence of the scanning lines 161 in the other liquid crystal display devices 101 and 601. According to this embodiment, however, it is possible to use three common liquid crystal display devices 101, 501 and 601 simply by connecting only the digital numeral signal which is input to the liquid crystal display device 501 to the counter circuit for outputting the sequentially subtracting digital numeral signal. It is better, in this case, to make the display pixel configurations of the respective liquid crystal devices 101, 501 and 601, even if the transmitted light is inverted, substantially equal to its configuration.

According to the present invention, it is possible to mirror-invert the display image and, by setting the digital numeral signals SA1-SA10 and DA1-DA9 from the counter or ROM, etc., to readily effect switching between when the display image from the liquid crystal projector 1 is displayed on a transmission type screen and when the image is displaced on a reflection type screen.

Although, in this embodiment, the input numeral signals SA1-SA20 for operating the scanning line drive circuit 201a constitute a 10-bit configuration and the input numeral signals DA1-DA18 for operating the video signal line drive circuit 301a constitute a 9-bit configuration, the scanning line drive circuit 201a for example is such that the maximal controllable number of scanning lines 161 becomes 1024 by a combination of connections at the matrix connection section 213a in the scanning line drive circuit 201a, for example.

In this embodiment, however, the scanning select circuit section 221a is provided between the matrix connection section 213a and the scanning lines 161 whereby it is possible to effect various types of drives and to control 1035 scanning lines 161 without involving an undue increase in the bit number of the input numeral signals (SA1-SA20).

However, a corresponding measure may be taken by increasing the number of bits of the input numeral signal or, conversely, in the case where the number of video signal lines 163 or number of scanning lines 161 is small it is possible to decrease the number of bits of the input numeral signals.

Although, in the above-mentioned embodiment, a cumbersome connection operation is eliminated by forming the scanning line drive circuits 201a, 201b and video signal line drive circuits 301a, 301b integrally over the substrate 113 as shown in FIG. 2, it may be possible to construct them as an external circuit using a discrete IC, etc.

It may be possible that either one of the scanning line drive circuits 201a, 201b and video signal line drive circuits 301a, 301b or one of sets of drive circuits 201a, 201b and 301a, 301b is constructed of a plurality of stages of shift registers as in the conventional structure or a different connection configuration is adopted between the numeral signal lines 212a and the logic circuit section 215a at the matrix connection section 213a with the scanning line drive circuits 201a, 201b on both the sides.

Although, in the embodiment, explanation has been given about the case where the high polymer diffused type liquid crystal is employed which can largely enhance the light utilization efficiency because of eliminating any polarizing plate, etc., the present invention is not restricted thereto and use can be made of conventionally known types of liquid crystal materials.

Between the pixel electrode and the common electrode, for example, a nematic liquid crystal with a positive dielectric anisotropy may be held, as the respective liquid crystal display devices 101, 501 and 601, though being not shown, to allow liquid crystal molecules to be 90° twisted through opposed alignment films on these electrodes so that a polarizing plate is arranged on the outer surface of the substrate to make the polarization axis aligned with the alignment axis.

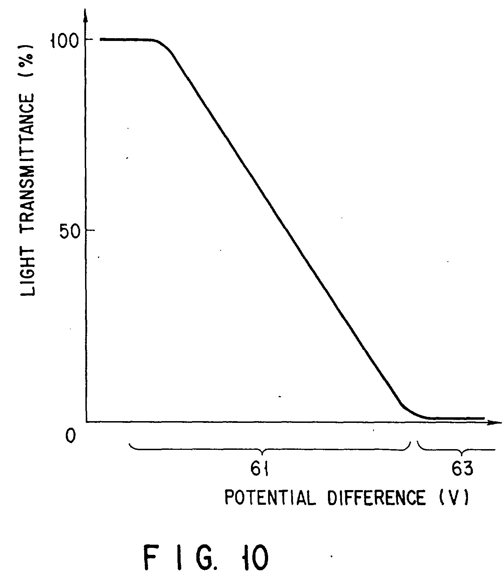

Thus, the so-called normally white mode liquid crystal devices 101, 501, 601 are constructed in which, as shown in FIG. 10, when a potential difference between the pixel electrode and the common electrode is at a 0V the transmittance becomes maximal and decreases with an increasing potential difference.

According to the liquid crystal projector 1 using the thus constructed normally white mode liquid crystal display deices 101, 501 and 601, when the non-display data VB are written into the non-display areas 901, 903 and 905, 907 shown in FIG. 9, a drive voltage is selected in a potential difference region 63 other than the potential difference region 61 across the pixel electrode and the common electrode which may be taken in a normal display state and, by doing so, the non-display areas 901, 903 and 905, 907 are divided as a plurality of blocks and even if display is completed in a plurality of blocks it is possible to secure a better black display.

Although in this embodiment the liquid crystal projector 1 comprised of the three liquid crystal display devices 101, 501 and 601 has been explained by way of example, needless to say, it may be constructed of one crystal display device. Further, as the optical system use may be made of various types of systems and the liquid crystal display device may be of a direct-viewing type.

Although in this embodiment the liquid crystal pixels have been explained as the display element, the present invention can be effectively applied if use is made of a display device having an element capable of light modulation, such as a display element whose light transmittance or reflectance varies in accordance with a drive voltage and a display element whose light emitting amount varies by a drive voltage.

Further, according to this embodiment, the respective numeral signal converting circuit sections may be so altered as to allow predetermined nothing-producing digital numeral signals, such as all 0 bits, to be inserted between any digital numeral signal trains. Since the predetermined digital numeral signals prevent the duplication of output pulses, it is possible to stably operate the display device.

### Industrial Applicability

According to the display device of the present invention, since less logic circuit sections are provided than the number of scanning lines or signal lines for selective outputting by the scanning circuit section or video signal supply circuit section on the basis of the input numeral signals from the select control circuit section, it is possible to, for the high definition of the display device, prevent an increase in the number of connections and of logic circuit sections transmitting numeral signals and hence to manufacture devices in a high yield.

Further, according to the drive method for the display device of the present invention, even if the number of horizontal pixel lines of the display panel and effective scanning lines of the video signals, or the number of display pixels constituting one horizontal pixel line and number of video data of video signals, differ, it is possible to display non-display data on non-display areas by, for example, displaying non-display data in a first period on at least one horizontal pixel line not corresponding to the effective scanning lines of the video signals while, at the same time, displaying non-display data, in a second period different from the first period, on a horizontal pixel line not corresponding to the effective scanning line of the video signals or by displaying non-display data, in a first period, on at least one display pixel not corresponding to video data while, at the same time, displaying non-display data, in a second period different from the first period, on other display pixels not corresponding to the video data. By, particularly, providing a logic circuit section for effecting the selective outputting of the scanning circuit section or video signal supply circuit section on the display device, it is possible to readily realize the above-mentioned drive method in a simpler circuit arrangement.

## Claims

1. A display device comprising:
a display panel (101) having a plurality of signal lines (163) and a plurality of scanning lines (161) arranged in a matrix, a plurality of switching elements (165) electrically connected to said signal lines (163) and scanning lines (161), and pixel electrodes (167) connected to said switching elements (165);
a scanning circuit section (201a) for supplying scanning signals to said scanning lines (161); and
a scanning control circuit section for controlling an n-bit input digital signal, n being a positive integer equal to or greater than 2, and for supplying the n-bit input digital signal and an inverted replica of the input digital signal to said scanning circuit section (201a);
**characterized in that**
said scanning circuit section (201a) comprises:
an input connection line group (212a) having sets of input connection lines for receiving bits of the input digital signal and bits of the inverted replica of the input digital signal,
a plurality of logic circuit sections (215a), less in number than said scanning lines (161), for responding to combinations of the input digital signal and the inverted replica of the input digital signal, and
output distributing means (221a) for assigning an output from one logic circuit section (215a) to at least two scanning lines (161).

2. The display device according to claim 1, **characterized in that** each logic circuit section (215a) comprises first logic circuit (NO1, NO2, NO3, NO4) connected to different input connection lines which are selected from the sets for each bit, and a second logic circuit (NA1, NA2, NO5) for responding to outputs of said first logic circuits (NO1, NO2, NO3, NO4).

3. The display device according to claim 1, **characterized in that** said output distributing means (221a) includes a select line (A) for receiving a select signal and is arranged such that one scanning line (161) is controlled based on a mutual relation between the select signal and an output of one logic circuit section (215a), and another scanning line (161) adjacent to said one scanning line (161) is controlled based on a mutual relation between the select signal and an output of another logic circuit section (215a).

4. The display device according to claim 1, **characterized in that** said output distibuting means (221a) includes a plurality of select lines (A, B, C) for receiving select signals, and is arranged such that one scanning line (161) is controlled based on a mutual relation of at least one select signal and an output of one logic circuit section (215a), and another scanning line (1161) adjacent to said one scanning line (161) is controlled based on a mutual relation between an output ot said one logic circuit section (215a) and another logic circuit section (215a).

5. The display device according to claim 1, **characterized in that** said switching elements (165) and scanning circuit section (201a) are integrated on one substrate (111) for said display panel.

6. The display device according to claim 1, **characterized in that** said logic circuit sections (215a) are arranged such that one logic section (215a) produces an output different from those of the other logic circuit sections (215a) according to the input digital signal.

7. A display device comprising:
a display panel (101) having a plurality of signal lines (163) and a plurality of scanning lines (161) arranged in a matrix, switching elements (165) electrically connected to said signal lines (163) and scanning lines (161) and pixel electrodes (167) connected to said switching elements (165) ;
a select control circuit section for generating an n-bit input digital signal, n being a positive integer equal to or greater than 2, and an inverted replica of the input digital signal; and
a video signal supplying circuit section (301a) for selecting, in predetermined timings, input video signals based on the input digital signal and the inverted replica of the input digital signal from said select control circuit section, and supplying selected video signals to said signal lines (163) as video data;
**characterized in that**
said video signal supplying circuit section (301a) comprises:
an input connection line group (312a) having sets of input connection lines for receiving bits of the input digital signal and bits of the inverted replica of the input digital signal,
a plurality of logic circuit sections (315a), less in number than said signal lines (163), for responding to combinations of the input digital signal and the inverted replica of the input digital signal, and
output distributing means (331a) for assigning an output from one logic circuit section (315a) to at least two signal lines (163).

8. The display device according to claim 7, **characterized in that** each logic circuit section (315a) comprises first logic circuits (NA1, NA2, NA3) connected to different input connection lines which are selected from the sets for each bit, and a second logic circuit (NO1) for responding to outputs of said first logic circuits (NA1, NA2, NA3).

9. The display device according to claim 7, **characterized in that** said video signal supplying circuit section (301a) comprises a plurality of video signal input lines (345a) for receiving the video signals and analog switching means (343a) for obtaining a plurality of video data from said video signal input lines (345a) on the basis of an output of one logic circuit section (315a).

10. The display device according to claim 7, **characterized in that** said switching elements (165) and video signal supplying circuit section (301a) are integrated on one substrate (111) for said display panel.

11. The display device according to any of claims 1 and 7, **characterized in that**
rows of the pixel electrodes (167) serve as horizontal pixel lines; and
said output distributing means (331a) is arranged such that, when the number of effective scanning lines in one vertical scanning period of the video signal is less than the number of the corresponding horizontal pixel lines, the input digital signal and input digital signal are output to display non-display data in a first period on at least one horizontal pixel line not corresponding to said effective scanning line of the video signal and display non-display data in a second period different from the first period, on another horizontal pixel line not corresponding to said effective scanning line of the video signal.

12. The display device according to claim 11, further comprising a projection optical system (2-9, 11, 19, 24, 31) for projecting on a screen (41) a display image corresponding to the video signal.

13. The display device according to claim 12, further comprising adjusting means for adjusting said projection optical system (2-9, 11, 19, 24, 31) for making the display image on said screen (41) substantially equal between when the number of said efective scanning lines in one vertical scanning period of the video signal is less than the number of the corresponding horizontal pixel lines and when the number of the effective scanning lines in one vertical scanning period of the video signal is substantially equal to the corresponding horizontal pixel lines.

## Patentansprüche

1. Anzeigevorrichtung mit:
einem Anzeige-Panel (101), das aufweist: eine Mehrzahl von Signalleitungen (163) und eine Mehrzahl von Abtastleitungen (161), die in einer Matrix angeordnet sind, eine mit den Signalleitungen (163) und den Abtastleitungen (161) elektrisch verbundene Mehrzahl von Schaltelementen (165) und mit den Schaltelementen (165) verbundene Pixel-Elektroden (167);
einen Abtastschaltungsabschnitt (201a) zum Liefern von Abtastsignalen an die Abtastleitungen (161); und
einen Abtaststeuerschaltungsabschnitt zum Steuern eines n-Bit-Eingangs-Digitalsignals, wobei n eine positive ganze Zahl gleich oder größer als 2 ist, und zum Liefern des n-Bit-Eingangs-Digitalsignals und einer invertierten Replik des Eingangs-Digitalsignals an den Abtastschaltungsabschnitt (201a);
**dadurch gekennzeichnet, daß**
der Abtastschaltungsabschnitt (201a) umfaßt:
eine Eingangsverbindungsleitungsgruppe (212a), die Sätze von Eingangsverbindungsleitungen zum Empfangen von Bits des Eingangs-Digitalsignals und von Bits der invertierten Replik des Eingangs-Digitalsignals aufweist,
eine Mehrzahl von Logikschaltungsabschnitten (215a), von geringerer Zahl als die Abtastleitungen (161), zum Antworten auf Kombinationen des Eingangs-Digitalsignals und der invertierten Replik des Eingangs-Digitalsignals, und
Ausgabeverteilungsmittel (221a) zum Zuordnen einer Ausgabe von einem Logikschaltungsabschnitt (215a) zu mindestens zwei Abtastleitungen (161).

2. Anzeigevorrichtung gemäß Anspruch 1, **dadurch gekennzeichnet, daß** jeder Logikschaltungsabschnitt (215a) umfaßt: eine erste Logikschaltung (N01, N02, N03, N04), die mit unterschiedlichen Eingangsverbindungsleitungen verbunden ist, die aus den Sätzen für jedes Bit ausgewählt sind, und eine zweite Logikschaltung (NA1, NA2, N05) zum Antworten auf Ausgaben der ersten Logikschaltungen (N01, N02, N03, N04).

3. Anzeigevorrichtung gemäß Anspruch 1, **dadurch gekennzeichnet, daß** das Ausgabeverteilungsmittel (221a) eine Auswahlleitung (A) zum Empfangen eines Auswahlsignals umfaßt und derart angeordnet ist, daß eine Abtastleitung (161) basierend auf einer gegenseitigen Beziehung zwischen dem Auswahlsignal und einer Ausgabe eines Logikschaltungsabschnitts (215a) gesteuert wird, und eine weitere Abtastleitung (161) benachbart zu der einen Abtastleitung (161) basierend auf einer gegenseitigen Beziehung zwischen dem Auswahlsignal und einer Ausgabe eines weiteren Logikschaltungsabschnitts (215a) gesteuert wird.

4. Anzeigevorrichtung gemäß Anspruch 1, **dadurch gekennzeichnet, daß** das Ausgabeverteilungsmittel (221a) eine Mehrzahl von Auswahlleitungen (A, B, C) zum Empfangen von Auswahlsignalen umfaßt, und derart angeordnet ist, daß eine Abtastleitung (161) basierend auf einer gegenseitigen Beziehung von mindestens einem Auswahlsignal und einer Ausgabe eines Logikschaltungsabschnitts (215a) gesteuert wird, und eine weitere Abtastleitung (161) benachbart zu der einen Abtastleitung (161) basierend auf einer gegenseitigen Beziehung zwischen einer Ausgabe des einen Logikschaltungsabschnitts (215a) und eines weiteren Logikschaltungsabschnitts (215a) gesteuert wird.

5. Anzeigevorrichtung gemäß Anspruch 1, **dadurch gekennzeichnet, daß** die Schaltungselemente (165) und der Abtastschaltungsabschnitt (201a) auf einem Substrat (111) für das Anzeige-Panel integriert sind.

6. Anzeigevorrichtung gemäß Anspruch 1, **dadurch gekennzeichnet, daß** die Logikschaltungsabschnitte (215a) derart angeordnet sind, daß ein Logikabschnitt (215a) eine Ausgabe erzeugt, die sich von derjenigen der weiteren Logikschaltungsabschnitte (215a) gemäß dem Eingangs-Digitalsignal unterscheiden.

7. Anzeigevorrichtung mit:
einem Anzeige-Panel (101), das aufweist: eine Mehrzahl von Signalleitungen (163) und eine Mehrzahl von Abtastleitungen (161), die in einer Matrix angeordnet sind, mit den Signalleitungen (163) und Abtastleitungen (161) elektrisch verbundene Schaltungselemente (165) und mit den Schaltungselementen (165) verbundene Pixel-Elektroden (167);
einem Auswahlsteuerschaltungsabschnitt zum Erzeugen eines n-Bit-Eingangs-Digitalsignals, wobei n eine positive ganze Zahl gleich oder größer als 2 ist, und einer invertierten Replik des Eingangs-Digitalsignals; und
einem Videosignal-Lieferungs-Schaltungsabschnitt (301a) zum Auswählen bei vorbestimmten Timings von Eingangs-Videosignalen basierend auf dem Eingangs-Digitalsignal und der invertierten Replik des Eingangs-Digitalsignals von dem Auswahlsteuerschaltungsabschnitt, und zum Liefern der ausgewählten Videosignale an die Signalleitungen (163) als Videodaten;
**dadurch gekennzeichnet, daß**
der Videosignal-Lieferungs-Schaltungsabschnitt (301a) umfaßt:
eine Eingangsverbindungsleitungsgruppe (312a), die Sätze von Eingangsverbindungsleitungen zum Empfangen von Bits des Eingangs-Digitalsignals und Bits der invertierten Replik des Eingangs-Digitalsignals aufweist,
eine Mehrzahl von Logikschaltungsabschnitten (315a), von geringerer Zahl als die Signalleitungen (163), zum Antworten auf Kombinationen des Eingangs-Digitalsignals und der invertierten Replik des Eingangs-Digitalsignals, und
Ausgabeverteilungsmittel (331a) zum Zuordnen einer Ausgabe von einem Logikschaltungsabschnitt (315a) zu mindestens zwei Signalleitungen (163).

8. Anzeigevorrichtung gemäß Anspruch 7, **dadurch gekennzeichnet, daß** jeder Logikschaltungsabschnitt (315a) umfaßt: erste Logikschaltungen (NA1, NA2, NA3) umfaßt, die mit unterschiedlichen Eingangsverbindungsleitungen verbunden sind, die aus den Sätzen für jedes Bit ausgewählt werden, und eine zweite Logikschaltung (NO1) zum Antworten auf die Ausgaben der ersten Logikschaltungen (NA1, NA2, NA3).

9. Anzeigevorrichtung gemäß Anspruch 7, **dadurch gekennzeichnet, daß** der Videosignal-Lieferungs-Schaltungsabschnitt (301a) eine Mehrzahl von Videosignal-Eingangsleitungen (345a) zum Empfangen der Videosignale und Analogschaltmittel (343a) zum Erhalten einer Mehrzahl von Videodaten von den Videosignal-Eingangsleitungen (345a) auf der Basis einer Ausgabe eines Logikschaltungsabschnitts (315a) umfaßt.

10. Anzeigevorrichtung gemäß Anspruch 7, **dadurch gekennzeichnet, daß** die Schaltungselemente (165) und der Videosignal-Lieferungs-Schaltungsabschnitt (301a) auf einem Substrat (111) für das Anzeige-Panel integriert sind.

11. Anzeigevorrichtung gemäß Anspruch 1 oder 7, **dadurch gekennzeichnet,**
**daß** Reihen der Pixel-Elektroden (167) als horizontale Pixel-Zeilen dienen; und
**daß** das Ausgabeverteilungsmittel (331a) derart angeordnet ist, daß, wenn die Zahl wirksamer Abtastleitungen in einer vertikalen Abtastzeitspanne des Videosignals geringer als die Zahl der entsprechenden horizontalen Pixel-Zeilen ist, das Eingangs-Digitalsignal und die invertierte Replik des Eingangs-Digitalsignals ausgegeben werden, um Nicht-Anzeigedaten in einer ersten Zeitspanne auf mindestens einer horizontalen Pixel-Zeile anzuzeigen, die nicht der wirksamen Abtastleitung des Videosignals entspricht, und Nicht-Anzeigedaten in einer von der ersten Zeitspanne unterschiedlichen zweiten Zeitspanne auf einer anderen horizontalen Pixel-Zeile anzuzeigen, die nicht der wirksamen Abtastleitung des Videosignals entspricht.

12. Anzeigevorrichtung gemäß Anspruch 11, ferner mit einem optischen Projektionssystem (2-9, 11, 19, 24, 31) zum Projizieren auf einem Bildschirm (41) eines dem Videosignal entsprechenden Anzeigebildes.

13. Anzeigevorrichtung gemäß Anspruch 12, ferner mit Einstellmittel zum Einstellen des optischen Projektionssystems (2-9, 11, 19, 24, 31), um das Anzeigebild auf dem Bildschirm (41) im wesentlichen gleich zu machen, wenn die Zahl der wirksamen Abtastleitungen in einer vertikalen Abtastzeitspanne des Videosignals geringer als die Zahl der entsprechenden horizontalen Pixel-Zeilen ist, und wenn die Zahl der wirksamen Abtastleitungen in einer vertikalen Abtastzeitspanne des Videosignals im wesentlichen gleich den entsprechenden horizontalen Pixel-Zeilen ist.

## Revendications

1. Dispositif d'affichage comprenant :
un panneau d'affichage (101) ayant une pluralité de lignes de signaux (163) et une pluralité de lignes de balayage (161) disposées dans une matrice, une pluralité d'éléments de commutation (165) raccordés électriquement auxdites lignes de signaux (163) et des lignes de balayage (161) et des électrodes de pixels (167) raccordées auxdits éléments de commutation (165) ;
une section de circuit de balayage (201a) pour fournir des signaux de balayage auxdites lignes de balayage (161) ; et
une section de circuit de commande de balayage pour commander un signal numérique d'entrée de n bits, n étant un entier positif égal ou supérieur à 2, et pour fournir le signal numérique d'entrée de n bits et une réplique inversée du signal numérique d'entrée à ladite section de circuit de balayage (201a) ;
**caractérisé en ce que**
ladite section de circuit de balayage (201a) comprend :
un groupe de lignes de connexion d'entrée (212a) ayant des jeux de lignes de connexion d'entrée pour recevoir des bits du signal numérique d'entrée et des bits de la réplique inversée du signal numérique d'entrée,
une pluralité de sections de circuit logique (215a) inférieure en nombre auxdites lignes de balayage (161), pour répondre aux combinaisons du signal numérique d'entrée et à la réplique inversée du signal numérique d'entrée, et
un moyen de distribution de sortie (221a) pour assigner une sortie d'une section de circuit logique (215a) à au moins deux lignes de balayage (161).

2. Dispositif d'affichage selon la revendication 1, **caractérisé en ce que** chaque section de circuit logique (215a) comprend un premier circuit logique (N01, N02, N03, N04,) raccordé aux différentes lignes de connexion d'entrée qui sont sélectionnées à partir des jeux pour chaque bit, et un second circuit logique (NA1, NA2, N05) pour répondre aux sorties desdits premiers circuits logiques (N01, N02, N03, N04).

3. Dispositif d'affichage selon la revendication 1, **caractérisé en ce que** ledit moyen de distribution de sortie (221a) comprend une ligne de sélection (A) pour recevoir un signal de sélection et est disposé pour qu'une ligne de balayage (161) soit commandée sur la base d'une relation mutuelle entre le signal de sélection et une sortie d'une section de circuit logique (215a), et une autre ligne de balayage (161) adjacente à ladite ligne de balayage (161) est commandée sur la base d'une relation mutuelle entre le signal de sélection et une sortie d'une autre section de circuit logique (215a).

4. Dispositif d'affichage selon la revendication 1, **caractérisé en ce que** ledit moyen de distribution de sortie (221a) comprend une pluralité de lignes de sélection (A, B, C) pour recevoir des signaux de sélection, et est disposé pour qu'une ligne de balayage (161) soit commandée sur la base d'une relation mutuelle d'au moins un signal de sélection et d'une sortie de section de circuit logique (215a), et une autre ligne de balayage (1161) adjacente à ladite ligne de balayage (161) est commandée sur la base d'une relation mutuelle entre une sortie de ladite section de circuit logique (215a) et une autre section de circuit logique (215a).

5. Dispositif d'affichage selon la revendication 1, **caractérisé en ce que** lesdits éléments de commutation (165) et une section de circuit de balayage (201a) sont intégrés sur un substrat (111) pour lesdits panneaux d'affichage.

6. Dispositif d'affichage selon la revendication 1, **caractérisé en ce que** lesdites sections de circuit logique (215a) sont disposées pour qu'une section logique (215a) produise une sortie différente de celles des autres sections de circuit logique (215a), selon un signal numérique d'entrée.

7. Dispositif d'affichage comprenant :
un panneau d'affichage (101) ayant une pluralité de lignes de signaux (163) et une pluralité de lignes de balayage (161) disposées dans une matrice, des éléments de commutation (165) électriquement raccordés auxdites lignes de signaux (163) et aux lignes de balayage (161) et aux électrodes de pixels (167) raccordées auxdits éléments de commutation (165) ;
une section de circuit de commande de sélection pour générer un signal numérique d'entrée de n bits, n étant un entier positif égal ou supérieur à 2, et une réplique inversée du signal numérique d'entrée ;
une section de circuit de fourniture de signal vidéo (301a) pour sélectionner, dans des temporisations prédéterminées, des signaux vidéo d'entrée sur la base du signal numérique d'entrée et la réplique inversée du signal numérique d'entrée à partir de ladite section de circuit de commande de sélection, et fourniture des signaux vidéo sélectionnés auxdites lignes de signaux (163) comme des donnés vidéo ;
**caractérisé en ce que**
ladite section de circuit de fourniture de signal vidéo (301a) comprend :
un groupe de lignes de connexion d'entrée (312a) ayant des jeux de lignes de connexion d'entrée pour recevoir des bits du signal numérique d'entrée et des bits de la réplique inversée du signal numérique d'entrée,
une pluralité de sections de circuit logique (315a) inférieure en nombre auxdites lignes de signaux (163), pour répondre à des combinaisons du signal numérique d'entrée et de la réplique inversée du signal numérique d'entrée, et
un moyen de distribution de sortie (331a) pour assigner une sortie d'une section de circuit logique (315a) à au moins deux lignes signaux (163).

8. Dispositif d'affichage selon la revendication 7 **caractérisé en ce que** chaque section de circuit logique (315a) comprend des premiers circuits logiques (NA1, NA2, NA3) raccordés aux différentes lignes de connexion d'entrée qui sont sélectionnées à partir des jeux pour chaque bit, et un second circuit logique (N01) pour répondre aux sorties desdits premiers circuits logiques (NA1, NA2, NA3).

9. Dispositif d'affichage selon la revendication 7, **caractérisé en ce que** ladite section de circuit de fourniture de signal vidéo (301a) comprend une pluralité de lignes d'entrée de signal vidéo (345a) pour recevoir les signaux vidéo et un moyen de commutation analogique (343a) pour obtenir une pluralité de données vidéo à partir desdites lignes d'entrée de signal vidéo (345a) sur la base d'une sortie d'une section de circuit logique (315).

10. Dispositif d'affichage selon la revendication 7, **caractérisé en ce que** lesdits éléments de commutation (165) et une section de circuit de fourniture de signal vidéo (301a) sont intégrés sur substrat (111) pour ledit panneau d'affichage.

11. Dispositif d'affichage selon l'une quelconque des revendications 1 et 7, **caractérisé en ce que** :
des rangées d'électrodes de pixels (167) servent comme lignes horizontales de pixels ; et
ledit moyen de distribution de sortie (331a) est disposé pour que, lorsque le nombre de lignes de balayage efficace dans une période de balayage vertical du signal vidéo est inférieur au nombre de lignes horizontales correspondantes de pixels, le signal numérique d'entrée et le signal numérique d'entrée sont fournis pour afficher des données de non-affichage dans une première période sur au moins une ligne horizontale de pixels ne correspondant pas à ladite ligne de balayage efficace du signal vidéo et affiche des données de non-affichage dans une seconde période différente de la première période, sur une autre ligne horizontale de pixels ne correspondant pas à ladite ligne de balayage efficace du signal vidéo.

12. Dispositif d'affichage selon la revendication 11, comprenant en outre un système optique de projection (2 à 9, 11, 19, 24, 31) pour projeter sur un écran (41) une image d'affichage correspondant au signal vidéo.

13. Dispositif d'affichage selon la revendication 12, comprenant en outre un moyen d'ajustage pour ajuster ledit système optique de projection (2 à 9, 11, 19, 24, 31) pour rendre l'image d'affichage sur l'écran (41) substantiellement égale lorsque le nombre desdites lignes de balayage efficace dans une période de balayage vertical du signal vidéo est inférieur au nombre de lignes horizontales de pixels correspondantes et lorsque le nombre de lignes de balayage efficace dans une période de balayage vertical est substantiellement égale aux lignes horizontales correspondantes de pixels.
